(19) Europäisches Patentamt
European Patent Office
Office européen des brevets

(11) Publication number: **0 189 927 B1**

(12) # EUROPEAN PATENT SPECIFICATION

(45) Date of publication of patent specification: **24.07.91**

(51) Int. Cl.5: **C08G 75/02**, C09D 181/02, C08L 81/02

(21) Application number: **86101239.1**

(22) Date of filing: **30.01.86**

(54) **Poly(arylene sulfide) coating compositions.**

(30) Priority: **31.01.85 US 696962**

(43) Date of publication of application: **06.08.86 Bulletin 86/32**

(45) Publication of the grant of the patent: **24.07.91 Bulletin 91/30**

(84) Designated Contracting States: **AT BE CH DE FR GB IT LI LU NL SE**

(56) References cited:
**EP-A- 0 079 144**
**FR-A- 2 537 589**
**US-A- 3 869 434**
**US-A- 3 979 543**

(73) Proprietor: **PHILLIPS PETROLEUM COMPANY**
**5th and Keeler**
**Bartlesville Oklahoma 74004(US)**

(72) Inventor: **Chen-Cheu Yu, Michael**
**208 N.E. Spruce Avenue**
**Bartlesville, OK 74006(US)**
Inventor: **Wright, Roy Franklin**
**2076 S.E. Southview**
**Bartlesville, OK 74003(US)**

(74) Representative: **Dost, Wolfgang, Dr. rer. nat. Dipl.-Chem. et al**
**Patent- u. Rechtsanwälte Bardehle, Pagenberg, Dost, Altenburg Frohwitter & Partner**
**Galileiplatz 1**
**W-8000 München 80(DE)**

**EP 0 189 927 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background

This invention relates to arylene sulfide polymers and their use as coating materials. In one aspect, the invention relates to the preparation of poly(arylene sulfide)s which are suitable for coating applications in which relatively low-temperature curing is desirable.

Poly(arylene sulfide) resins have properties such as thermal stability and chemical resistance which make the resins useful for coating substrates. Coating-grade poly(arylene sulfide) resins are conventionally prepared in a reaction mixture containing p-dichlorobenzene, sodium hydroxide, a sulfur source such as sodium hydrosulfide, and a polar organic reaction medium such as N-methylpyrrolidone. The resulting poly(p-phenylene sulfide) can be applied to a substrate as a finely-divided solid in slurry and cured by heating in air to form a tough, chemical-resistant coating on the substrate.

US 3 979 543 discloses a method of producing a glossy poly(arylene sulfide) coating by covering the surface of an article to be coated with a slurry containing poly(arylene sulfide) and an amount of siliceous material and curing the covered surface in oxygen containing atmosphere at a temperature within the range of 260 °C to 482 °C.

In order to form a continuous, smooth coating on the substrate, it is generally necessary to cure the poly(p-phenylene sulfide) at a temperature above about 370 °C. Such a cure temperature has the disadvantages of requiring special heating equipment, increasing the cost of the coating procedure, and limiting the substrates and environments with which the coating can be used. Some substrate materials will be degraded by exposure to such a high cure temperature.

It is therefore an object of the present invention to provide new poly(arylene sulfide) coating formulations. It is a further object to provide methods for preparing and treating poly(arylene sulfide) coating resins which reduce the cure temperature of coating formulations in which the resins are employed. It is a further object to provide low-temperature methods of coating a substrate with a poly(arylene sulfide).

### Summary of the Invention

According to the invention, a PAS coating composition, a method for coating a substrate and a method for preparing a PAS coating composition are provided as defined in the claims. Poly(arylene sulfide) coating formulations are prepared comprising a finely-divided poly(arylene sulfide) which comprises from 75 to 99 mole percent aromatic units of the form

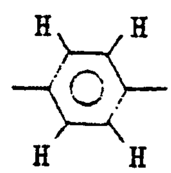

(which will be referred to herein as the "para" aromatic unit) and from 1 to 25 mole percent aromatic units of the form

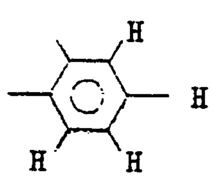

(which will be referred to herein as the "ortho" aromatic unit) or of the form

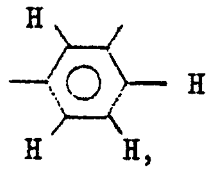

(which will be referred to herein as the "meta" aromatic unit). The poly(arylene sulfide) optionally comprises from 0.1 to 2 mole percent of aromatic units of the form

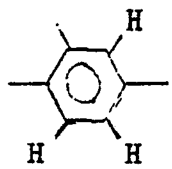

or isomeric forms thereof (which will be referred to herein as the "trifunctional" aromatic unit).

According to the invention, poly(arylene sulfide)s suitable for coating compositions having relatively low cure temperatures are prepared by contacting a sulfur source, a base and aromatic reactants comprising a major amount of a p-dihaloaromatic compound and a minor amount of an o- or m-dihaloaromatic compound, in a polar organic medium containing a molar excess of the base of at least 10 percent, preferably 10 percent to 15 percent, based on moles of sulfur present in the reaction mixture.

According to a further embodiment of the invention, poly(arylene sulfide) resins as described above are recovered from the reaction medium and washed with water at an elevated temperature of at least 120 °C, preferably at least 170 °C.

According to the invention, a method for forming a coating on a substrate is provided, the method comprising applying a coating composition as described above to a substrate and heating the applied composition in an oxygen-containing atmosphere to effect curing of the poly(arylene sulfide). In a preferred embodiment of the invention method, the curing is carried out at a temperature below 350 °C for a time of 30 minutes or less.

## Detailed Description of the Invention

The poly(arylene sulfide) resins suitable for the invention coating compositions comprise a major portion of repeating units of the form

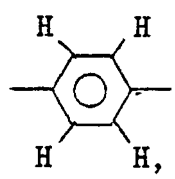

(referred to herein as the "para" aromatic unit) and minor amounts of one or more of the aromatic units of the form

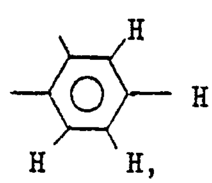

referred to herein as the "ortho" aromatic unit) and

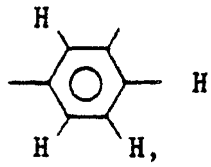

(referred to herein as the "meta" aromatic unit) and, optionally,

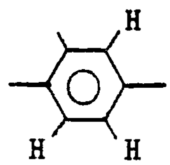

or isomeric variations thereof, referred to herein as the trifunctional aromatic unit. Each of the above-described aromatic units may bear a $C_1$ to $C_3$ alkyl substituent on the aromatic ring.

The para aromatic units are products of the polymerization of p-dihaloaromatic compounds such as p-dichlorobenzene and p-dibromobenzene. The para aromatic units will be present in the poly(arylene sulfide) and in the polymerization reaction mixture in an amount of about 75 to about 99, preferably about 85 to about 98, most preferably about 92 to about 97.5 mole percent, based on total moles of aromatic units. The meta and/or ortho aromatic units will be present in the poly(arylene sulfide) and in the polymerization reaction mixture in an amount of 1 to 25 mole percent, preferably 2 to 15 mole percent, most preferably 2.5 to 8 percent. The trifunctional aromatic unit, when present, will be present in an amount of 0.1 to 2 mole percent, preferably 0.2 to 1.5 mole percent, most preferably 0.4 to 1.0 percent.

The invention polymerization process is designed to produce poly(arylene sulfide) which exhibits satisfactory cure rates and good coating quality at curing temperatures below 350° C, preferably below 330° C, most preferably from 285° C to 330° C, although good cure is obtained at temperatures from 250° C to 425° C, provided the substrate can withstand temperatures in the high end of this range. A reaction mixture containing the following ingredients is prepared to produce the coating resin: from 75 to 99 mole percent, based on total moles of aromatic starting materials, of a p-dihaloaromatic compound, such as p-dichlorobenzene; from 1 to 25 mole percent of an aromatic compound selected from at least one of an o-dihaloaromatic and a m-dihaloaromatic compound such as o-dichlorobenzene or m-dichlorotoluene, for example; optionally, from 0.1 to 2 mole percent of a trifunctional aromatic compound such as 1,2,4-trichlorobenzene; a sulfur source such as sodium sulfide, sodium bisulfide, elemental sulfur or hydrogen sulfide; a base such as an alkali metal or alkaline earth metal hydroxide present in an excess molar amount, with respect to the amount of the sulfur present, optionally an excess amount of about 10 to about 20 percent, preferably about 10 to about 15 percent; and a liquid polar organic medium present generally in an amount of 2 to 10 moles per mole of the sulfur source.

It has been found that the use of a molar excess of the basic component of the reaction mixture will produce a copolymer having a lower curing temperature than obtained using the 5 percent molar excess which is conventional in a commercial poly(phenylene sulfide) reaction mixture. In addition, it has been found that the cure temperature of even those copolymers prepared using 5 percent molar excess can be lowered by adding to the reaction mixture a trifunctional aromatic monomer such as 1,2,4-trichlorobenzene. The trifunctional aromatic compound will usually be added to such coating polymers in an amount of about 0.1 to about 2 mole percent, preferably 0.2 to 1.5 mole percent, and most preferably 0.4 to 1.0 mole percent, based on total moles of aromatic monomers present.

The reaction mixture comprising a sulfur source, a base, the chosen aromatic compounds, and a polar organic medium is maintained under polymerization conditions for a time of about 1 hour to about 10 hours so as to produce a poly(arylene sulfide) copolymer. The reaction mixture can optionally contain a molecular weight modifying additive such as an alkali metal carboxylate. The conditions of polymerization of poly-(phenylene sulfide) are known in the art and can be used in preparing the present coating resins, with certain modifications effective for lowering the cure temperature of the resins as expressly set forth herein. The copolymer is recovered from the polymerization reaction mixture by any suitable means such as flash distillation of the polar organic medium or aqueous extraction of the polymer and filtration of smaller particles to recover the solid poly(arylene sulfide) copolymer.

The solid copolymer is then washed, preferably with water at a temperature greater than 100°C, preferably 120 to about 250°C, most preferably 150 to 200°C. It has been found that use of such hot water for washing the recovered poly(arylene sulfide) produces a coating resin which cures at a lower temperature than a resin washed with water at a lower temperature.

In order to be useful as a coating material, the poly(arylene sulfide) must be in finely-divided form. The coating formulation is generally an intimate mixture of the finely-ground poly(arylene sulfide) and any desired additives selected to modify coating performance or appearance. To achieve particle size reduction and substantially even mixing, a ball or rod mill or the like can be used. The presently preferred particle size reduction method is air milling.

The suitable particle size for the poly(arylene sulfide) will generally be 0.25 mm (60 mesh) or smaller for best coating performance. Additives which can be included in the coating formulations include olefin polymers, tetrafluoroethylene polymers, surface active agents, pigments and fillers. Examples of such additives in poly(arylene sulfide) coating compositions include titantium dioxide, ferric oxide, cobaltic oxide, zinc oxide, molybdenum disulfide, graphite, carbon black, calcium carbonate and silica. Such additives will generally be present in the coating composition in an amount of from 1.5 to 25 weight percent, based on the weight of the coating composition.

A preferred coating composition will generally contain at least one of the above-described poly(arylene sulfide)s in finely-divided form and from 1 to 40 weight percent of titanium dioxide, preferably 3 to 30, weight percent. For application of a coating to a substrate by the fluidized bed process, the composition can contain a fluidizing agent such as silica present in an amount of 0.5 to 10 weight percent.

The composition will generally be applied to a substrate in a slurry of the finely-divided polymer and additives. The slurry can be applied to the substrate by any suitable method such as brushing, spraying or dipping, and the medium can then be removed by, for example, evaporation prior to or during the curing process. Examples of carrier fluids for the coating composition include water, ethylene glycol, propylene glycol, glycerol, methyl alcohol, ethyl alcohol and isopropyl alcohol. The coating composition can also be applied in a fluidized bed having the finely-divided poly(arylene sulfide) in fluidized state. For any method of coating used, a primer such as cobalt oxide can be applied to the substrate prior to application of the coating composition.

Suitable substrates for application of the coating include any material which can withstand the temperature of curing, such as metal, glass, ceramic and plastics. The substrate can be in any form, including sheeting, wire, coupons and blanks. The compositions are particularly useful for coating wire, as mold release coatings and pipe coatings.

The solid components of the slurry will generally be present in an amount of from 10 to 60 weight percent, based on the weight of the slurry, preferably 20 to 40 weight percent, although this amount can vary widely and is not critical.

After application to the substrate, the coating composition is cured by heating in an oxygen-containing atmosphere such as air to a temperature above about 250°C for 1 minute to 24 hours. The curing time will depend upon the particular composition, the substrate environment and the temperature of curing, but will usually be within the range of 8 minutes to $1\frac{1}{2}$ hours. It is generally desirable for convenience and economy to keep the curing time to no more than 30 minutes. The invention compositions permit curing at relatively low temperatures within a time of 30 minutes. The curing is effected in an oxygen-containing atmosphere. If desired, the cured coating can be annealed by heating the coated substrate above about 110°C, preferably about 180 to about 250°C, for about 20 minutes to about 12 hours.

EXAMPLE I

This example describes the preparation of various poly(phenylene sulfide) coating resins from a reaction mixture containing sodium hydrosulfide and sodium hydroxide.

To a stirred 1-liter autoclave was charged 96.37 grams (1 mole) of 58.18 weight percent aqueous NaSH, 46 grams (1.15 moles) NaOH and 200 grams of N-methyl-2-pyrrolidone. The reactor was closed and heated to 160°C in 50 minutes with a slow $N_2$ purge in the vapor phase of the reactor. At about 155°C water began to distill. The heating was continued to 205°C during which time about 41 milliliters of liquid was removed. The reactor was cooled to 180°C and a mixture of 144.06 grams (0.98 mole) of p-dichlorobenzene, 7.35 grams (0.05 mole) of o-dichlorobenzene and 130 grams of N-methyl-2-pyrrolidone was added. The contents were then heated to 235°C in about 30 minutes, held at 235°C for 1 hour, heated to 265°C and held there for 2 hours and then cooled to ambient room temperature. The polymer was removed, washed about 5 or 6 times with warm (80°C) water, and then put in an autoclave and slurried with about 300 milliliters of deionized water. The slurry was heated to 175°C in about 30 minutes, held at 175°C for

another 30 minutes during which time the pressure reached 1.03 MPa (150 psig). The slurry was cooled to room temperature and filtered, and the polymer was dried in a vacuum oven at 80 °C overnight. The product was 100.87 grams (93.4 weight percent yield) of polymer having an intrinsic viscosity of 0.14 and an ash content of 0.6 weight percent.

The above general procedure was repeated several times using varying amounts of dichlorobenzenes, NaSH and NaOH. The properties of these polymers are listed in Table I. Runs I and J employ m-dichlorobenzene in place of o-dichlorobenzene.

**TABLE I**

**Polymers Prepared**

| Polymer Designation | Ingredients, moles | | | | | Polymer Properties | | | | |
|---|---|---|---|---|---|---|---|---|---|---|
| | p-DCB | o-DCB | m-DCB | NaSH | NaOH | I.V.[a] | ER[b] | Tg | Tc | Tm |
| A[c] | 1.0 | - | - | 1.0 | 1.05 | - | 30-70 | - | - | - |
| B | 1.03 | - | - | 1.0 | 1.15 | 0.16 | - | 83 | 129 | 275 |
| C | 0.98 | 0.05 | - | 1.0 | 1.05 | 0.16 | 63 | - | - | - |
| D | 0.98 | 0.05 | - | 1.0 | 1.10 | 0.16 | 73 | - | - | - |
| E | 0.98 | 0.05 | - | 1.0 | 1.15 | 0.11 | 250 | - | - | - |
| F | 0.88 | 0.15 | - | 1.0 | 1.05 | 0.13 | 55 | 84 | 171 | 220 |
| G | 0.88 | 0.15 | - | 1.0 | 1.10 | 0.16 | 30 | - | - | - |
| H | 0.87 | 0.15 | - | 1.0 | 1.15 | 0.11 | 235 | 79 | 160 | 220 |
| I | 0.98 | - | 0.05 | 1.0 | 1.05 | 0.17 | 31 | - | - | - |
| J | 0.98 | - | 0.05 | 1.0 | 1.15 | 0.14 | 134 | - | - | - |

a. Inherent Viscosity, measured on 0.4 weight-% solutions in 1-chloronaphthalene at 206°C.

b. Extrusion Rate, g/10 min, carried out in accordance with test method ASTM D1238, Procedure B modified by employing a temp. of 600°F (315.6°C), an orifice of 2.096 ± 0.005mm (0.0825 ± .0002 inch) diameter x 31.75 ± 0.05mm (1.250 ± .002 inch) length and a total driving weight including the piston of 345 grams.

c. Uncured commercial Ryton® poly(p-phenylene sulfide).

EXAMPLE II

This example describes the procedure used to evaluate the polymers prepared in Example I as coating materials. The amount of ingredients varied somewhat between the different coating formulations, but the ratios of ingredients were essentially the same. Thus, a typical coating formulation was prepared by mixing for 5 to 8 minutes in a Waring® blender 18 grams of the polymer, 6 grams of $TiO_2$ and 56 grams of propylene glycol. The resulting slurry was spread with a coating rod over 7.6 cm x 15.2 cm x 0.089 cm (3 inch x 6 inch x 0.035 inch) cold rolled steel panels precleaned by vapor degreasing or acetone prior to heating the panels in a forced air oven at 370 °C for one hour. The coated panels were placed in a circulating air oven (288-371 °C) (550-700 °F) for 30 minutes, removed from the oven and cooled to room temperature. The coating procedure was repeated to provide a second and third coats. After the third coat cooled, the coated panels were bent 180° over a 4.8 mm (3/16 inch) mandrel. Any cracks or other coating ruptures were noted and the coating was evaluated as follows: 1 = excellent to good; 2 = micro cracks; 3 = cracks; 4 = complete rupture. If the coating at this point passed with a rating of 1 or 2, the coating was heated at 232 °C (450 °F) for 2 hours, and this annealed coating was again evaluated using the mandrel bend test.

The results from the mandrel bend test are listed in Table II. PPS copolymers were prepared which required a lower bake temperature (e.g., 301 °C-315 °C) than the normal bake temperature of 370 °C (Polymer A). This was possible through the use of at least 10 mole percent excess NaOH (Polymers D and G) and preferably 15 mole percent excess NaOH (Polymers E and H) during the initial polymerization process. Polymers with less than 10 mole percent excess NaOH (Polymers C and F, with 5 mole percent excess) required a higher bake temperature to pass the bend test. The effect of 5 to 15 mole percent excess NaOH was applicable to copolymers regardless of whether the comonomer is o-dichlorobenzene or m-dichlorobenzene. Likewise, the ratio of p-dichlorobenzene to either o-or m-dichlorobenzene (e.g. 95/5 or 85/15) did not appear to affect the bake temperature.

TABLE II

Coating Data

| Polymer | % Excess NaOH | Polymer[a] | Mandrel Bend Test Ratings[b, c] Curing Temperature 288°C | 300°C | 315°C | 343°C | 370°C |
|---|---|---|---|---|---|---|---|
| A | 5 | Homopolymer | - | - | 1/4 | - | 1/1 |
| B | 15 | Homopolymer | - | - | 3/- | - | 3/- |
| C | 5 | Copolymer (95/5) o- | - | - | 2/4 | - | - |
| D | 10 | Copolymer (95/5) o- | 4/4 | 1/4 | 1/1 | 1/1 | - |
| E | 15 | Copolymer (95/5) o- | 1/3 | 1/1 | 1/1 | 1/1 | - |
| F | 5 | Copolymer (85/15) o- | 4/- | - | 1/4 | 4/- | - |
| G | 10 | Copolymer (85/15) o- | 4/- | - | 1/2 | - | - |
| H | 15 | Copolymer (85/15) o- | 1/4 | - | 1/1 | - | 4/4 |
| I | 5 | Copolymer (95/5) m- | - | - | 1/4 | - | - |
| J | 15 | Copolymer (95/5) m- | 4/1 | - | 1/1 | - | - |

a. Weight or mole ratios of p-DCB/o-DCB or p-DCB/m-DCB

b. Coating baked 30 minutes at specified temperatures and cooled to about 27°C(80°F) before testing.

Ratings: 1 = excellent to good
2 = micro cracks
3 = cracks
4 = complete rupture

c. Unannealed/annealed at 230°C for 2 hours; 1/4 means that the rating was "1" for the unannealed coating and "4" for the annealed coating.

Of additional interest was the fact that the excess NaOH appeared to affect the bake temperature only for PPS copolymers and not PPS homopolymers. This is noted with Polymers A and B, for which unacceptable mandrel bend ratings were obtained when bake temperatures below 371°C (700°F) were employed. The data appears to suggest that excess NaOH may in some instances be actually detrimental in making PPS homopolymers for coatings since neither a 315°C or 371°C (600°F or 700°F) bake temperature provided a satisfactory coating when 15 mole percent excess NaOH was used to produce Polymer B.

## Example III

This example illustrates the effect of the temperature at which phenylene sulfide copolymer resins are washed on the performance of the copolymer coatings.

Two copolymer resins were prepared substantially in accordance with the polymerization procedure of Example I, with the following exceptions:

(a) in both runs, 129.36 grams (0.88 moles) of p-DCB and 22.05 grams (0.15 moles) of o-DCB were used;

(b) in run K, 42.0 grams (1.05 moles) of NaOH and 95.0 grams of aqueous NaSH (1.00 mole NaSH) were employed;

(c) in run L, 44.0 grams (1.10 moles) of NaOH and 95.0 grams of aqueous NaSH (1.00 mole NaSH) were employed;

(d) in run K, the polymerization was carried out at 245 °C for 3 hours;

(e) in run L, the polymerization was carried out for 1 hour at 235 °C, for 1 hour at 265 °C, and for 1 hour at 280 °C.

The copolymers of both runs were washed with water at about 80 °C. A portion of the thus washed copolymers (polymers K-1 and L-1) were dried and then tested in coating applications, essentially in accordance with the procedure described in Example II. The second portions of polymers K-1 and L-1 were then washed again at 177 °C. The twice-washed copolymer samples (polymers K-2 and L-2) were dried and also tested in coating applications, essentially in accordance with the procedure of Example II. Test results are summarized in Table III.

**Table III**

| Polymer | Washing Conditions | Mandrel Bend Test Rating[1] Unannealed/Annealed[2] | Surface Appearance[3] Unannealed/Annealed |
|---|---|---|---|
| K-1 | 80°C | 1/4 | 3/3 |
| K-2 | 80°C/177°C | 1/1 | 2/2 |
| L-1 | 80°C | 1/1 | 2/2 |
| L-2 | 80°C/177°C | 1/1 | 1/1 |

1) See footnote b of Table II; all coatings were baked at 315°C.
2) See footnote c of Table II.
3) Rating of coating appearance before Mandrel Bend Test; rating scale is the same as for Mandrel Bend Test (see footnote b of Table II).

Data in Table III clearly show that those samples of copolymers (prepared with about 15 mole-% o-DCB) which were washed at 177 °C consistently gave better surface appearances in coating applications (annealed or unannealed) than those samples that were washed only at 80 °C. In one case, also the "annealed" Mandrel Bend Test rating of the 177 °C-washed polymer sample (K-2) was significantly better than that of the 80 °C-washed polymer sample (K-1).

## Claims

**1.** A coating composition comprising:

(1) finely-divided poly(arylene sulfide) produced from a poly(arylene sulfide) reaction mixture comprising:

(a) about 75 to about 99 mole percent of at least one para-dihaloaromatic compound and from about 1 to about 25 mole percent of at least one ortho- or meta-dihaloaromatic compound, said mole percentages being based on the total moles of said aromatic compounds,

(b) a sulfur compound,

(c) a base present in a molar excess of 10 to 20 percent relative to the amount of sulfur, and

(d) a liquid polar organic medium;

(2) about 1 to about 40 weight percent, based on the total dry weight of the coating composition, of a solid additive selected from the group consisting of corrosion inhibitors, pigments, surface active agents, filler, and fluidizing agents; and

(3) a carrier fluid.

**2.** The coating composition according to claim 1 wherein the poly(arylene sulfide) reaction mixture comprises from 85 to 98 mole percent of at least one para-dihaloaromatic compound and from about 2 to about 15 mole percent of at least one ortho- or meta-dihaloaromatic compound.

**3.** The coating composition according to claim 1 wherein the poly(arylene sulfide) reaction mixture comprises from 92 to 97.5 mole percent of at least one para-dihaloaromatic compound and from about 2.5 to about 8 mole percent of at least one ortho- or meta-dihaloaromatic compound.

**4.** The coating composition according to any one of claims 1 to 3 wherein the solid additive is selected from olefin polymers, poly(tetrafluoroethylene), titanuim dioxide, ferric oxide, cobaltic oxide, zinc oxide, molybdenum disulfide, graphite, carbon black, calcium carbonate, silica, and combinations thereof.

**5.** The coating composition according to claim 1 wherein the poly(arylene sulfide) reaction mixture comprises from 1 to 25 mole percent of at least one ortho-dihaloaromatic compound.

**6.** The coating composition according to claim 1 wherein the poly(arylene sulfide) reaction mixture comprises from 1 to 25 mole percent of at least one meta-dihaloaromatic compound.

**7.** The coating composition according to any one of claims 1 to 6 wherein the solid additive is titanium dioxide.

**8.** The coating composition according to any one of claims 1 to 7 wherein the carrier fluid is selected from the group consisting of water, ethylene glycol, propylene glycol, glycerol, methyl alcohol, ethyl alcohol and isopropyl alcohol.

**9.** The coating composition according to any one of claims 1 to 8 wherein the poly(arylene sulfide) reaction mixture further comprises from 0.1 to 2 mole percent of a trifunctional aromatic compound.

**10.** The coating composition according to any one of claims 1 to 9 wherein the poly(arylene sulfide) reaction mixture comprises aromatic compounds containing at least one $C_1$-$C_3$ alkyl substituent.

**11.** The coating composition according to any one of claims 1 to 10 wherein the finely-divided poly(arylene sulfide) is predominantly in the form of 0.25 mm (60 mesh) or smaller particles.

**12.** A method for coating a substrate comprising:
(1) applying to the substrate a coating composition according to any one of claims 1 to 11, and
(2) heating the applied coating composition at a temperature of from about 250 to about 425° C in an oxygen-containing atmosphere for a time of about 1 minute to about 12 hours.

**13.** The method according to claim 12 wherein the applied coating is heated in an oxygen-containing atmosphere at a temperature of 285 to 330° C for a time of 1 minute to 30 minutes.

**14.** The method according to claim 12 or 13 wherein the coating composition comprises silica and the coating composition is applied to the substrate in a fluidized bed.

**15.** The method according to any one of claims 12 to 14 further comprising applying a primer to the substrate to be coated.

**16.** The method according to any one of claims 12 to 15 further comprising annealing the cured coating by heating the cured coating to a temperature of 110 to 250° C for about 20 minutes to about 12 hours.

**17.** A method for preparing a poly(arylene sulfide) coating composition having a cure temperature of less than 330° C over a cure time of less than 1.5 hours, the method comprising:
(a) polymerizing a reaction mixture of about 75 to about 99 mole percent of at least one para-dihaloaromatic compound, about 1 to about 25 mole percent, based on total moles of aromatic compounds, of at least one ortho- or meta-dihaloaromatic compound, a sulfur compound, a base present in a molar excess of 10 to 20 percent relative to the amount of sulfur, and a polar organic compound;
(b) recovering solid poly(arylene sulfide) from the reaction mixture; and
(c) preparing from the recovered poly(arylene sulfide) a coating composition comprising the recovered poly(arylene sulfide) in finely-divided form, a solid additive and a carrier fluid.

18. The method according to claim 17 wherein the base is an alkali metal or alkaline earth metal hydroxide.

19. The method according to claim 17 or 18 wherein the sulfur compound is selected from the group cosisting of sodium sulfide, sodium bisulfide, elemental sulfur, and hydrogen sulfide.

20. The method according to claim 18 or 19 wherein the base is sodium hydroxide and the sulfur comound is sodium sulfide.

21. The method according to any of claims 17 to 20 wherein the reaction mixture further comprises from 0.1 to 2 mole percent of a trihaloaromatic compound.

22. The method according to any one of claims 17 to 21 wherein the para-dihaloaromatic compound is p-dichlorobenzene and is present in an amount of about 85 to about 98 mole percent, and the meta- or ortho-dihaloaromatic compounds are m-dichlorobenzene or o-dichlorobenzene, respectively, and are present in an amount of about 15 to about 2 mole percent.

23. The method according to any one of claims 17 to 22 wherein the polar organic compound in N-methylpyrrolidone.

24. The method according to claim 17 further comprising washing the recovered poly(arylene sulfide) with water at a temperature of about 120 to about 250° C.

25. The method according to claim 22 wherein said solid additive selected from the group consisting of olefin polymers, poly(tetrafluoroethylene), titanium dioxide, ferric oxide, cobaltic oxide, zinc oxide, molybdenum disulfide, graphite, carbon black, calcium carbonate, silica, and combinations thereof.

26. The method according to claim 22 wherein the carrier fluid is selected from water, ethylene glycol, propylene glycol, glycerol, methyl alcohol, ethyl alcohol and isopropyl alcohol.

27. The method according to claim 22, wherein the carrier fluid is propylene glycol, and the method further comprises combining 3 to 30 weight percent titanium dioxide, based on the dry weight of the coating composition, to the poly(arylene sulfide).

28. The method according to claim 22 further comprising adding to the poly(arylene sulfide) 0.5 to 10 weight percent, based on the dry weight of the coating composition, of a fluidizing agent.

**Revendications**

1. Composition de revêtement comprenant :
   (1) un poly(sulfure d'arylène) finement divisé, produit à partir d'un mélange réactionnel de poly-(sulfure d'arylène) comprenant :
      (a) environ 75 à environ 99 pour-cent en moles d'au moins un composé para-dihaloaromatique et environ 1 à environ 25 pour-cent en moles d'au moins un composé ortho- ou méta-dihaloaromatique, ledit pourcentage molaire étant exprimé par rapport au total de moles desdits composés aromatiques,
      (b) un composé du soufre,
      (c) une base présente en un excès molaire de 10 à 20 pour-cent, sur la base de la quantité de composé du soufre, et
      (d) un milieu liquide organique polaire;
   (2) environ 1 à environ 40 pour-cent en poids, sur la base du poids sec total de la composition de revêtement, d'un additif solide choisi dans le groupe constitué des inhibiteurs de corrosion, des pigments, des tensio-actifs, des charges et des agents de fluidisation; et
   (3) un fluide vecteur.

2. Composition de revêtement selon la revendication 1, où le mélange réactionnel de poly(sulfure d'arylène) comprend de 85 à 98 pour cent en moles d'au moins un composé para-dihaloaromatique et environ 2 à environ 15 moles pour-cent d'au moins un composé ortho- ou méta-dihaloaromatique.

3. Composition de revêtement selon la revendication 1, où le mélange réactionnel de poly(sulfure d'arylène) comprend de 92 à 97,5 pour-cent en moles d'au moins un composé para-dihaloaromatique et environ 2,5 à environ 8 pour-cent en moles d'au moins un composé ortho- ou méta-dihaloaromatique.

4. Composition de revêtement selon l'une quelconque des revendications 1 à 3, où l'additif solide est choisi parmi les polymères oléfiniques, le polytétrafluoroéthylène, l'oxyde de titane, l'oxyde ferrique, l'oxyde cobaltique, l'oxyde de zinc, le bisulfure de molybdène, le graphite, le noir de carbone, le carbonate de calcium, la silice et leurs combinaisons.

5. Composition de revêtement selon la revendication 1, où le mélange réactionnel de poly(sulfure d'arylène) comprend de 1 à 25 pour-cent en moles d'au moins un composé ortho-dihaloaromatique.

6. Composition de revêtement selon la revendication 1, où le mélange réactionnel de poly(sulfure d'arylène) comprend de 1 à 25 pour-cent en moles d'au moins un composé méta-dihaloaromatique.

7. Composition de revêtement selon l'une quelconque des revendications 1 à 6, où l'additif solide est le dioxyde de titane.

8. Composition de revêtement selon l'une quelconque des revendications 1 à 7, où le fluide vecteur est choisi dans le groupe constitué de l'eau, de l'éthylène glycol, du propylène glycol, du glycérol, de l'alcool méthylique, de l'alcool éthylique et de l'alcool isopropylique.

9. Composition de revêtement selon l'une quelconque des revendications 1 à 8, où le mélange réactionnel de poly(sulfure d'arylène) comprend en outre de 0,1 à 2 pour-cent en moles d'un composé aromatique trifonctionnel.

10. Composition de revêtement selon l'une quelconque des revendications 1 à 9, où le mélange réactionnel de poly(sulfure d'arylène) comprend des composés aromatiques contenant au moins un substituant alkyle $C_1$-$C_3$.

11. Composition de revêtement selon l'une quelconque des revendications 1 à 10, où le poly(sulfure d'arylène) finement divisé est, de manière prédominante, sous la forme de particules de 0,25 mm (60 mesh) ou moins.

12. Méthode pour appliquer un revêtement sur un substrat comprenant de :
(1) appliquer sur le substrat une composition de revêtement selon l'une quelconque des revendications 1 à 11 et de
(2) chauffer la composition de revêtement appliquée à une température allant d'environ 250 à environ 425 °C dans une atmosphère contenant de l'oxygène, pendant une durée allant d'environ 1 minute à environ 12 heures.

13. Méthode selon la revendication 12, où le revêtement appliqué est chauffé dans une atmosphère contenant de l'oxygène à une température de 285 à 330 °C pendant une durée allant de 1 minute à 30 minutes.

14. Méthode selon la revendication 12 ou 13, où la composition de revêtement comprend de la silice et où la composition de revêtement est appliquée au substrat dans un lit fluidisé.

15. Méthode selon l'une quelconque des revendications 12 à 14, comprenant en outre d'appliquer une couche d'apprêt sur le substrat avant le revêtement.

16. Méthode selon l'une quelconque des revendications 12 à 15, comprenant en outre de recuire le revêtement cuit en chauffant le revêtement cuit à une température de 110 à 250 °C pendant environ 20 minutes à environ 12 heures.

17. Méthode de préparation d'une composition de revêtement en poly(sulfure d'arylène) ayant une température de cuisson inférieure à 330 °C pour une durée de cuisson de moins de 1,5 heures, la

méthode comprenant de :

(a) polymériser un mélange réactionnel comprenant environ 75 à environ 99 pour-cent de moles d'au moins un composé para-dihaloaromatique, environ 1 à environ 25 pour-cent en moles, sur la base du total des moles de composés aromatiques, d'au moins un composé ortho- ou méta-dihaloaromatique, un composé du soufre, une base présente en un excès molaire de 10 à 20 pour-cent par rapport à la quantité de soufre, et un composé organique polaire;

(b) récupérer le poly(sulfure d'arylène) solide du mélange réactionnel; et de

(c) préparer à partir du poly(sulfure d'arylène) récupéré une composition de revêtement comprenant le poly(sulfure d'arylène) récupéré, sous une forme finement divisée, un additif solide et un fluide vecteur.

**18.** Méthode selon la revendication 17, où la base est un hydroxyde de métal alcalin ou de métal alcalino-terreux.

**19.** Méthode selon la revendication 17 ou 18, où le composé du soufre est choisi dans le groupe constitué du sulfure de sodium, du bisulfure de sodium, du soufre élémentaire et de l'hydrogène sulfuré.

**20.** Méthode selon la revendication 18 ou 19, où la base est l'hydroxyde de sodium et le composé du soufre est le sulfure de sodium.

**21.** Méthode selon l'une quelconque des revendications 17 à 20, où le mélange réactionnel comprend en outre de 0,1 à 2 pour-cent en moles d'un composé trihaloaromatique.

**22.** Méthode selon l'une quelconque des revendications 17 à 21, où le composé para-dihaloaromatique est le p-dichlorobenzène, présent en une proportion allant d'environ 85 à environ 98 pour-cent en moles, et où les composés méta- ou ortho-dihaloaromatiques sont respectivement le m-dichlorobenzène ou le o-dichlorobenzène, présents en une proportion allant d'environ 15 à environ 2 pour-cent en moles.

**23.** Méthode selon l'une quelconque des revendications 17 à 22, où le composé organique polaire est la N-méthylpyrrolidone.

**24.** Méthode selon la revendication 17, comprenant en outre de laver le poly(sulfure d'arylène) récupéré avec de l'eau à une température allant d'environ 120 à environ 250 °C.

**25.** Méthode selon la revendication 22, où ledit additif solide est choisi dans le groupe constitué des polymères oléfiniques, du polytétrafluoroéthylène, de l'oxyde de titane, de l'oxyde ferrique, de l'oxyde cobaltique, de l'oxyde de zinc, du bisulfure de molybdène, du graphite, du noir de carbone, du carbonate de calcium, de la silice et leurs combinaisons.

**26.** Méthode selon la revendication 22, où le fluide vecteur est choisi parmi l'eau l'éthylène glycol, le propylène glycol, le glycérol, l'alcool méthylique, l'alcool éthylique et l'alcool isopropylique.

**27.** Méthode selon la revendication 22, où le fluide vecteur est le propylène glycol, la méthode comprenant en outre de combiner au poly(sulfure d'arylène) de 3 à 30 pour-cent en poids d'oxyde de titane, sur la base du poids sec de la composition de revêtement.

**28.** Méthode selon la revendication 22, comprenant en outre d'ajouter au poly(sulfure d'arylène) de 0,5 à 10 pour-cent en poids d'un agent de fluidisation, sur la base du poids sec de la composition de revêtement.

## Patentansprüche

**1.** Beschichtungszusammensetzung, enthaltend:

(1) fein verteiltes Poly-(arylensulfid), hergestellt aus einem Poly-(arylensulfid)-Reaktionsgemisch mit einem Gehalt an:

(a) etwa 75 bis etwa 99 Mol-% mindestens einer para-dihalogenaromatischen Verbindung und etwa 1 bis etwa 25 Mol-% mindestens einer ortho- oder meta-dihalogenaromatischen Verbindung, wobei sich die prozentualen Molangaben auf die Gesamtmolzahl der aromatischen Verbindungen

beziehen,
(b) einer Schwefelverbindung,
(c) einer Base, die in einem molaren Überschuss von 10 - 20 % in Bezug auf die Menge des Schwefels vorhanden ist, und
(d) einem flüssigen, polaren, organischen Medium;
(2) etwa 1 bis etwa 40 Gew.-%, bezogen auf das Gesamttrockengewicht der Beschichtungszusammensetzung, eines festen Additivs, das aus der Gruppe Korrosionsinhibitoren, Pigmente, oberflächenaktive Mittel, Füllstoffe und Fluidisierungsmittel ausgewählt ist; und
(3) ein Trägerfluid.

2. Zusammensetzung nach Anspruch 1, wobei das Poly-(arylensulfid)-Reaktionsgemisch 85 - 98 Mol-% mindestens einer para-dihalogenaromatischen Verbindung und etwa 2 bis etwa 15 Mol-% mindestens einer ortho- oder meta-dihalogenaromatischen Verbindung enthält.

3. Zusammensetzung nach Anspruch 1, wobei das Poly-(arylensulfid)-Reaktionsgemisch 92 - 97,5 Mol-% mindestens einer para-dihalogenaromatischen Verbindung und etwa 2,5 bis etwa 8 Mol-% mindestens einer ortho- oder meta-dihalogenaromatischen Verbindung enthält.

4. Beschichtungszusammensetzung nach einem der Ansprüche 1 bis 3, wobei das feste Additiv unter Olefinpolymeren, Poly-(tetrafluorethylen), Titandioxid, Eisen(III)-oxid, Kobalt(III)-oxid, Zinkoxid, Molybdändisulfid, Grafit, Russ, Calciumcarbonat, Siliciumdioxid und Kombinationen davon ausgewählt ist.

5. Beschichtungszusammensetzung nach Anspruch 1, wobei das Poly-(arylensulfid)-Reaktionsgemisch 1 - 25 Mol-% mindestens einer ortho-dihalogenaromatischen Verbindung enthält.

6. Beschichtungszusammensetzung nach Anspruch 1, wobei das Poly-(arylensulfid)-Reaktionsgemisch 1 - 25 Mol-% mindestens einer meta-dihalogenaromatischen Verbindung enthält.

7. Beschichtungszusammensetzung nach einem der Ansprüche 1 - 6, wobei es sich bei dem festen Additiv um Titandioxid handelt.

8. Beschichtungszusammensetzung nach einem der Ansprüche 1 - 7, wobei das Trägerfluid aus der Gruppe Wasser, Ethylenglykol, Propylenglykol, Glycerin, Methylalkohol, Ethylalkohol und Isopropylalkohol ausgewählt ist.

9. Beschichtungszusammensetzung nach einem der Ansprüche 1 - 8, wobei das Poly-(arylensulfid)-Reaktionsgemisch zusätzlich 0,1 - 2 Mol-% einer trifunktionellen aromatischen Verbindung enthält.

10. Beschichtungszusammensetzung nach einem der Ansprüche 1 - 9, wobei das Poly-(arylensulfid)-Reaktionsgemisch aromatische Verbindungen mit mindestens einem $C_1$-$C_3$-Alkylsubstituenten enthält.

11. Beschichtungszusammensetzung nach einem der Ansprüche 1 - 10, wobei das fein verteilte Poly-(arylensulfid) vorwiegend in der Form von Teilchen von 0,25 mm (60 mesh) oder darunter vorliegt.

12. Verfahren zur Beschichtung eines Substrats, umfassend:
(1) Aufbringen einer Beschichtungszusammensetzung nach einem der Ansprüche 1 bis 11 auf das Substrat und
(2) Erwärmen der aufgebrachten Beschichtungszusammensetzung auf eine Temperatur von etwa 250 bis etwa 425 °C in einer sauerstoffhaltigen Atmosphäre für eine Zeitspanne von etwa 1 Minute bis etwa 12 Stunden.

13. Verfahren nach Anspruch 12, wobei der aufgebrachte Überzug in einer sauerstoffhaltigen Atmosphäre für eine Zeitspanne von 1 Minute bis 30 Minuten auf eine Temperatur von 285 bis 330 °C erwärmt wird.

14. Verfahren nach Anspruch 12 oder 13, wobei die Beschichtungszusammensetzung Siliciumdioxid enthält und die Beschichtungszusammensetzung auf das Substrat in einem Wirbelbett aufgebracht wird.

15. Verfahren nach einem der Ansprüche 12 bis 14, wobei zusätzlich auf das zu beschichtende Substrat

ein Grundanstrich aufgebracht wird.

**16.** Verfahren nach einem der Ansprüche 12 bis 15, wobei der gehärtete Überzug zusätzlich getempert wird, indem man ihn etwa 20 Minuten bis etwa 12 Stunden auf eine Temperatur von 110 bis 250° C erwärmt.

**17.** Verfahren zur Herstellung einer Poly-(arylensulfid)-Beschichtungszusammensetzung mit einer Härtungstemperatur von weniger als 330° C bei einer Härtungszeit von weniger als 1,5 Stunden, wobei das Verfahren folgendes umfasst:
(a) Polymerisieren eines Reaktionsgemisches von etwa 75 bis etwa 99 Mol-% mindestens einer para-dihalogenaromatischen Verbindung, etwa 1 bis etwa 25 Mol-%, bezogen auf die Gesamtmolzahl der aromatischen Verbindungen, mindestens einer ortho- oder meta-dihalogenaromatischen Verbindung, einer Schwefelverbindung, einer Base, die in einem molaren Überschuss von 10 - 20 % in Bezug auf die Menge des Schwefels vorhanden ist, und einer polaren organischen Verbindung;
(b) Gewinnen von festem Poly-(arylensulfid) aus dem Reaktionsgemisch; und
(c) Verarbeiten des gewonnenen Poly-(arylensulfids) zu einer Beschichtungszusammensetzung, die das gewonnene Poly-(arylensulfid) in fein verteilter Form, ein festes Additiv und ein Trägerfluid enthält.

**18.** Verfahren nach Anspruch 17, wobei es sich bei der Base um ein Alkalimetall- oder Erdalkalimetallhydroxid handelt.

**19.** Verfahren nach einem der Ansprüche 17 oder 18, wobei die Schwefelverbindung aus der Gruppe Natriumsulfid, Natriumbisulfid, elementarer Schwefel und Schwefelwasserstoff ausgewählt wird.

**20.** Verfahren nach Anspruch 18 oder 19, wobei es sich bei der Base um Natriumhydroxid und bei der Schwefelverbindung um Natriumsulfid handelt.

**21.** Verfahren nach einem der Ansprüche 17 bis 20, wobei das Reaktionsgemisch zusätzlich 0,1 bis 2 Mol-% einer trihalogenaromatischen Verbindung enthält.

**22.** Verfahren nach einem der Ansprüche 17 bis 21, wobei es sich bei der para-dihalogenaromatischen Verbindung um p-Dichlorbenzol handelt und diese Verbindung in einer Menge von etwa 85 bis etwa 98 Mol-% vorhanden ist und wobei es sich bei den meta- oder ortho-dihalogenaromatischen Verbindungen um m-Dichlorbenzol bzw. o-Dichlorbenzol handelt und diese Verbindungen in einer Menge von etwa 15 bis etwa 2 Mol-% vorhanden sind.

**23.** Verfahren nach einem der Ansprüche 17 bis 22, wobei es sich bei der polaren organischen Verbindung um N-Methylpyrrolidon handelt.

**24.** Verfahren nach Anspruch 17, wobei zusätzlich das gewonnene Poly-(arylensulfid) mit Wasser bei einer Temperatur von etwa 120 bis etwa 250° C gewaschen wird.

**25.** Verfahren nach Anspruch 22, wobei das feste Additiv aus der Gruppe Olefinpolymere, Poly-(tetrafluorethylen), Titandioxid, Eisen(III)-oxid, Kobalt(III)-oxid, Zinkoxid, Molybdändisulfid, Grafit, Russ, Calciumcarbonat, Siliciumdioxid und Kombinationen davon ausgewählt ist.

**26.** Verfahren nach Anspruch 22, wobei das Trägerfluid unter Wasser, Ethylenglykol, Propylenglykol, Glycerin, Methylalkohol, Ethylalkohol und Isopropylalkohol ausgewählt ist.

**27.** Verfahren nach Anspruch 22, wobei es sich bei dem Trägerfluid um Propylenglykol handelt und das Verfahren zusätzlich die Vereinigung von 3 - 30 Gew.-% Titandioxid, bezogen auf das Trockengewicht der Beschichtungszusammensetzung, mit dem Poly-(arylensulfid) umfasst.

**28.** Verfahren nach Anspruch 22, wobei das Poly-(arylensulfid) zusätzlich mit 0,5 bis 10 Gew.-%, bezogen auf das Trockengewicht der Beschichtungszusammensetzung, eines Fluidisierungsmittels versetzt wird.